(19) Europäisches Patentamt
European Patent Office
Office européen des brevets

(11) Veröffentlichungsnummer : **0 073 986**
**B1**

(12) # EUROPÄISCHE PATENTSCHRIFT

(45) Veröffentlichungstag der Patentschrift : **07.08.85**

(51) Int. Cl.⁴ : **C 07 F 9/18**, A 01 N 57/14

(21) Anmeldenummer : **82107612.2**

(22) Anmeldetag : **20.08.82**

(54) **3-Fluorphenyl-(di)thiophosphorsäureester, Verfahren zu ihrer Herstellung und ihre Verwendung zur Bekämpfung von Schädlingen.**

(30) Priorität : **28.08.81 DE 3134136**

(43) Veröffentlichungstag der Anmeldung : **16.03.83 Patentblatt 83/11**

(45) Bekanntmachung des Hinweises auf die Patenterteilung : **07.08.85 Patentblatt 85/32**

(84) Benannte Vertragsstaaten : **BE CH DE FR GB IT LI NL**

(56) Entgegenhaltungen :
**EP-A- 0 022 954**
**EP-A- 0 049 383**
**GB-A- 1 311 773**
**DERWENT JAPANESE PATENTS, week T42, 12.-18. Oktober 1972, Part C: Agricultural Chemistry, Seite 4, Nr. 67874T**
**CHEMICAL ABSTRACTS, Band 86, Nr. 11, 14. März 1977, Seite 156, Nr. 66868w, Columbus, Ohio, USA**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Seufert, Walter, Dr.**
**Bruesseler Ring 28**
**D-6700 Ludwigshafen (DE)**
Erfinder : **Loeffler, Hans-Peter, Dr.**
**Sinsheimer Strasse 42**
**D-6700 Ludwigshafen (DE)**
Erfinder : **Adolphi, Heinrich, Dr.**
**Kalmitweg 11**
**D-6703 Limburgerhof (DE)**

**EP 0 073 986 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft 3-Fluorphenyl-(di)thiophosphorsäureester, ein Verfahren zu ihrer Herstellung und Schädlingsbekämpfungsmittel, die diese Verbindungen als Wirkstoffe enthalten.

O,S-Dialkyl-O-halogenphenyl-thiophosphorsäureester, die sich zur Bekämpfung von Schädlingen, wie Insekten, Spinnentieren und Nematoden, eignen, sind aus der DE-AS 21 63 391 und der SU-PS 482 460 bekannt.

Es wurde gefunden, daß 3-Fluorphenyl-(di)thiophosphorsäureester der Formel

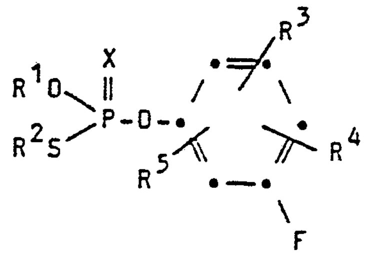

(I)

in der

$R^1$ Alkyl mit 1 bis 3 Kohlenstoffatomen,

$R^2$ Alkyl oder Halogenalkyl mit 1 bis 5 Kohlenstoffatomen, Alkoxyalkyl oder Alkylthioalkyl mit 2 bis 8 Kohlenstoffatomen oder Cycloalkyl mit 3 bis 6 Kohlenstoffatomen

$R^3$, $R^4$, $R^5$ unabhängig voneinander Wasserstoff, Halogen, Cyano, Nitro, Alkyl, Alkoxy oder Alkylthio mit 1 bis 6 Kohlenstoffatomen und

X Sauerstoff oder Schwefel bedeuten,

Schädlinge aus der Klasse der Insekten, Spinnentiere und Nematoden wirksam bekämpfen. Sie sind den bekannten O,S-Dialkyl-O-halogenphenyl-thiophosphorsäurerestern analoger Konstitution in ihrer Wirkung überlegen.

In Formel I stehen die Substituenten $R^1$ für Alkylreste mit 1 bis 3 Kohlenstoffatomen, wie Methyl, Ethyl, n-Propyl, i-Propyl, $R^2$ für Alkyl- oder Halogenalkylreste mit 1 bis 5 Kohlenstoffatomen, wie Ethyl, n-Propyl, i-Propyl, n-Butyl, sec-Butyl, i-Butyl, n-Pentyl, 1-Methyl-n-butyl, 3-Methyl-n-pentyl, 2-Chlorethyl, 3-Chlor-n-propyl, für Alkoxyalkyl- oder Alkylthioalkylreste mit 2 bis 8, vorzugsweise 2 bis 5 Kohlenstoffatomen, wie 2-Methoxyethyl, 2-Ethoxyethyl, 2-Isopropoxyethyl, 2-Methylthioethyl, 2-Ethylthioethyl, oder für Cycloalkylreste mit 3 bis 6 Kohlenstoffatomen, wie Cyclopentyl, Cyclohexyl, sowie $R^3$, $R^4$ und $R^5$, die verschieden sein können, für Wasserstoff, Halogen, wie Chlor, Brom oder Fluor, für Nitro oder Cyano oder für Alkyl, Alkoxy oder Alkylthio mit 1 bis 4 Kohlenstoffatomen, vorzugsweise mit 1 und 2 Kohlenstoffatomen, wie Methyl ; Ethyl, Methoxy, Ethoxy, Methylmercapto, Ethylmercapto.

Man erhält die 3-Fluorphenyl-(di)thiophosphorsäureester der Formel I durch Umsetzung von O,S-Dialkylphosphorsäureesterchloriden der Formel

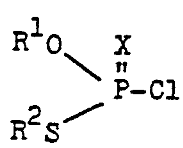

(II)

in der $R^1$, $R^2$ und X die oben angegebenen Bedeutungen haben, gegebenenfalls in Gegenwart eines säurebindenden Mittels und in Gegenwart eines Verdünnungsmittels mit einem 3-Fluorphenol der Formel

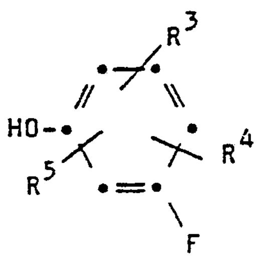

(III)

in der $R^3$, $R^4$ und $R^5$ die oben genannten Bedeutungen haben, oder mit einem Salz eines 3-Fluorphenols der Formel III gegebenenfalls in Gegenwart eines Verdünnungsmittels.

Der Reaktionsablauf kann durch das folgende Formelschema wiedergegeben werden :

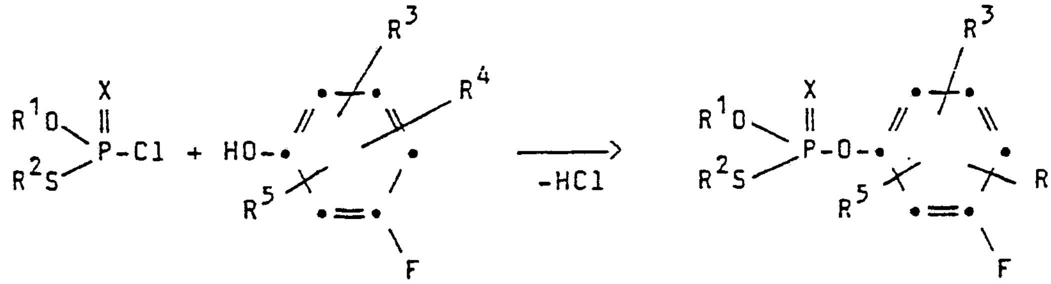

Die Umsetzung von Phosphorsäureesterchlorid der Formel II mit Phenol der Formel III kann in einem organischen Verdünnungsmittel, wie Aceton, Acetonitril, Benzol, Toluol, Chlorbenzol, Methylethylketon, oder in zwei-Phasen-Systemen, wie Toluol/Wasser, Dichlormethan/Wasser, durchgeführt werden.

Zweckmäßigerweise setzt man die 1- bis 2-molare Menge eines säurebindenden Mittels, bezogen auf Phenol der Formel III, zu. Vorzugsweise wird ein Überschuß von etwa 10 % verwendet. Geeignet sind Basen, wie Alkalimetallcarbonate, z. B. Kaliumcarbonat, Alkalihydroxide, z. B. Natriumhydroxid, oder tertiäre Amine, z. B. Triäthylamin. Anstelle von Base und Phenol kann ebenso ein Salz des Phenols mit den Phosphorsäureesterchlorid umgesetzt werden. Als Salze kommen Alkalimetallsalze, Erdalkalimetallsalze oder gegebenenfalls substituierte Ammoniumsalze, wie Alkylammoniumsalze, beispielsweise Dimethylammoniumsalze, Triethylammoniumsalze, Natrium- und Calciumsalze, in Betracht.

Die Reaktionstemperatur kann in einem größeren Bereich variiert werden. Im allgemeinen arbeitet man zwischen Raumtemperatur und 100 °C, vorzugsweise zwischen 30 und 70 °C. Man läßt die Umsetzung im allgemeinen unter Normaldruck ablaufen.

Zur Durchführung des Verfahrens setzt man die Ausgangsstoffe in äquimolarem Verhältnis ein. Ein Überschuß der einen oder anderen Reaktionskomponente kann in einigen Fällen Vorteile bringen. Vorzuggsweise verwendet man auf 1 Mol phenol 0,9 bis 1,1 Mole Phosphorsäureesterchlorid.

Das Reaktionsgemisch wird in üblicher Weise aufgearbeitet, z. B. durch Versetzen mit Wasser und Trennen der Phasen. Die Rohprodukte können durch Destillation oder Säulenchromatographie gereinigt werden.

O,S-Dialkylphosphorsäureesterchloride der Formel II sind bekannt und können nach bekannten Verfahren hergestellt werden (DE-OS 26 42 982 ; J. Org. Chem. *30*, 3217 (1965)).

Die 3-Fluorphenole der Formel III lassen sich ebenfalls nach bekannten Verfahren herstellen (US-PS 3 794 734, FR-PS 2 234 261).

Folgende weitere Verfahren führen ebenfalls zu den erfindungsgemäßen Verbindungen :

3-Fluorphenyl-thiophosphorsäureester der Formel Ia lassen sich in einer Arbusow-Reaktion durch Umsetzung von phosphorigsäureestern der Formel IV mit Sulfenylchloriden der Formel $R^2SCl$ nach folgendem Reaktionsschema herstellen :

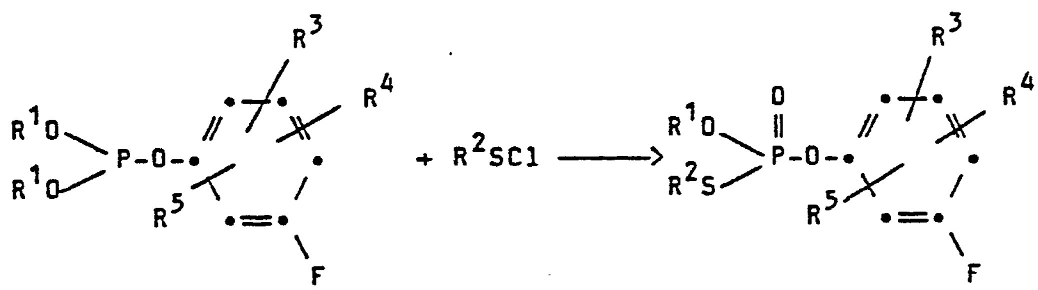

(IV) (Ia)

Ebenso sind die 3-Fluorphenyl-thiophosphorsäureester der Formel Ia durch Alkylierung von phosphorsäureestersalzen der Formel V mit Alkylierungsmitteln der Formel $R^2Y$ zugänglich :

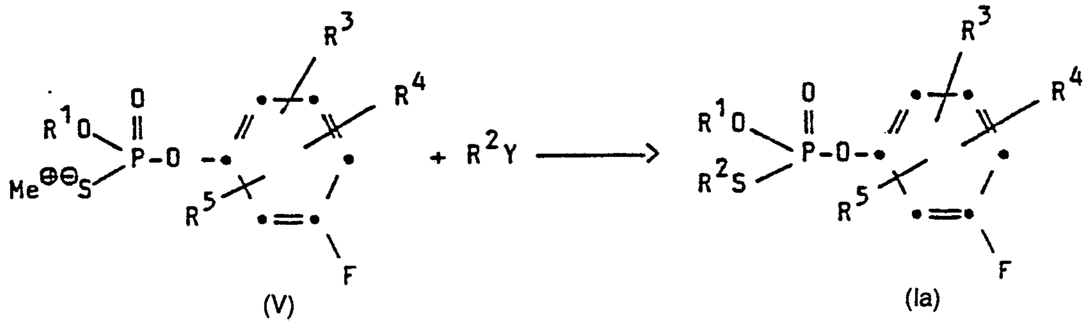

(V) (Ia)

Außerdem lassen sich Phosphorsäureesterdichloride der Formel VI mit Alkoholen und Mercaptanen der Formeln $R^1OH$ bzw. $R^2SH$ zu Verbindungen der Formel I umsetzen :

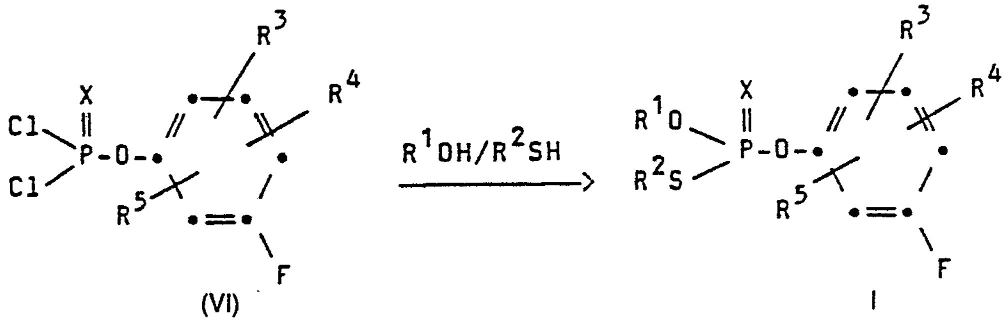


(VI) I

In diesen Reaktionsschemata haben die Substituenten $R^1$, $R^2$, $R^3$, $R^4$ und $R^5$ sowie X die oben genannten Bedeutungen. $Me^{\oplus}$ steht für ein Metallkation oder ein gegebenenfalls durch Alkylgruppen substituiertes Ammoniumion und Y bedeutet Halogenid, beispielsweise Jodid, Bromid, Chlorid, oder Alkylsulfat, beispielsweise Methylsulfat.

## Herstellungsbeispiel

Zu 6,1 Teilen 3-Fluorphenol in 90 Teilen Acetonitril gibt man 7,6 Teile Kaliumcarbonat und erwärmt unter Rühren eine Stunde lang unter Rückfluß. Dann tropft man bei 50 °C 10,1 Teile O-Ethyl-S-propyl-thiophosphoresterchlorid zu und rührt 4 Stunden lang bei 50 °C und anschließend 24 Stunden lang bei Raumtemperatur. Man entfernt das Lösungsmittel am Rotationsverdampfer, versetzt mit 400 Teilen Toluol und 100 Teilen Wasser, trennt die Phasen und wascht die organische Phase mit 2 n Natronlauge und anschließend mit Wasser, trocknet über Natriumsulfat und entfernt das Lösungsmittel und flüchtige Verunreinigungen unter vermindertem Druck bei 40 °C und 0,13 mbar. Man erhält als Rückstand 10,5 g Produkt mit dem Brechungsindex $n_D^{21} = 1{,}500\,0$.

Folgende Verbindungen lassen sich nach einem der angegebenen Verfahren herstellen :

(Siehe Tabellen Seite 5 ff.)

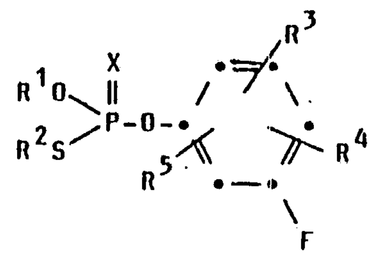

| Nr. | $R^1$ | $R^2$ | X | $R^3$ | $R^4$ | $R^5$ | $n_D$ |
|---|---|---|---|---|---|---|---|
| 1 | $C_2H_5$ | $n-C_3H_7$ | O | H | H | H | $n_D^{25} = 1,5000$ |
| 2 | $C_2H_5$ | $sec.-C_4H_9$ | O | H | H | H | $n_D^{20} = 1,5029$ |
| 3 | $C_2H_5$ | $C_2H_5-O-(CH_2)_2-$ | O | H | H | H | $n_D^{20} = 1,5390$ |
| 4 | $C_2H_5$ | $n-C_3H_7$ | S | H | H | H | $n_D^{23} = 1,4990$ |
| 5 Gemisch aus | | | | | | | |
| | $C_2H_5$ | $n-C_3H_7$ | O | 6-Br | H | H und | |
| | $C_2H_5$ | $n-C_3H_7$ | O | H | 4-Br | H | $n_D^{22} = 1,5232$ |
| 6 Gemisch aus | | | | | | | |
| | $C_2H_5$ | $sec.-C_4H_9$ | O | 6-Br | H | H und | |
| | $C_2H_5$ | $sec.-C_4H_9$ | O | H | 4-Br | H | $n_D^{22} = 1,5239$ |
| 7 Gemisch aus | | | | | | | |
| | $C_2H_5$ | $i-C_4H_9$ | O | 6-Br | H | H und | |
| | $C_2H_5$ | $i-C_4H_9$ | O | H | 4-Br | H | $n_D^{22} = 1,5208$ |

| Nr. | $R^1$ | $R^2$ | X | $R^3$ | $R^4$ | $R^5$ | $n_D$ |
|---|---|---|---|---|---|---|---|
| 8 Gemisch aus | | | | | | | |
| | $C_2H_5$ | $CH_3O-(CH_2)_2-$ | O | 6-Br | H | H und | |
| | $C_2H_5$ | $CH_3O-(CH_2)_2-$ | O | H | 4-Br | H | $n_D^{25}$ = 1,5210 |
| 9 Gemisch aus | | | | | | | |
| | $C_2H_5$ | $C_2H_5-O-(CH_2)_2-$ | O | 6-Br | H | H und | |
| | $C_2H_5$ | $C_2H_5-O-(CH_2)_2-$ | O | H | 4-Br | H | $n_D^{24}$ = 1,5196 |
| 10 Gemisch aus | | | | | | | |
| | $C_2H_5$ | $n-C_3H_7$ | S | 6-Br | H | H und | |
| | $C_2H_5$ | $n-C_3H_7$ | S | H | 4-Br | H | $n_D^{24}$ = 1,5595 |
| 11 | $C_2H_5$ | $ClCH_2-(CH_2)_2-$ | O | H | 4-Br | H | |
| 12 | $C_2H_5$ | $ClCH_2-(CH_2)_2-$ | O | H | 4-CN | H | |
| 13 | $C_2H_5$ | $n-C_3H_7$ | O | 6-Br | 4-Br | H | $n_D^{23}$ = 1,5480 |
| 14 | $C_2H_5$ | sec.-$C_4H_9$ | O | 6-Br | 4-Br | H | $n_D^{22}$ = 1,5437 |
| 15 | $C_2H_5$ | $1-C_4H_9$ | O | 6-Br | 4-Br | H | $n_D^{26}$ = 1,5418 |
| 16 | $C_2H_5$ | $C_2H_5O(CH_2)_2-$ | O | 6-Br | 4-Br | H | $n_D^{25}$ = 1,5405 |
| 17 | $C_2H_5$ | $n-C_3H_7$. | S | 6-Br | 4-Br | H | $n_D^{21}$ = 1,5841 |

| Nr. | $R^1$ | $R^2$ | X | $R^3$ | $R^4$ | $R^5$ | $n_D$ |
|---|---|---|---|---|---|---|---|
| 18 | $C_2H_5$ | sec.-$C_4H_9$ | S | 6-Br | 4-Br | H | $n_D^{27}$ = 1,5755 |
| 19 | $C_2H_5$ | n-$C_3H_7$ | O | 6-Cl | H | H | $n_D^{25}$ = 1,5112 |
| 20 | $C_2H_5$ | sec.-$C_4H_9$ | O | 6-Cl | H | H | $n_D^{22}$ = 1,5111 |
| 21 | $C_2H_5$ | i-$C_4H_9$ | O | 6-Cl | H | H | $n_D^{25}$ = 1,5077 |
| 22 | $C_2H_5$ | $CH_3O(CH)_2$- | O | 6-Cl | H | H | $n_D^{22}$ = 1,5118 |
| 23 | $C_2H_5$ | $C_2H_5O(CH_2)_2$- | O | H | H | 6-Cl | $n_D^{22}$ = 1,5080 |
| 24 | $C_2H_5$ | n-$C_3H_7$ | O | H | 4-Cl | 6-Cl | $n_D^{22}$ = 1,5240 |
| 25 | $C_2H_5$ | sec.-$C_4H_9$ | O | H | 4-Cl | 6-Cl | $n_D^{22}$ = 1,5195 |
| 26 | $C_2H_5$ | i-$C_4H_9$ | O | 6-Cl | 4-Cl | H | $n_D^{22}$ = 1,5188 |
| 27 | $C_2H_5$ | $CH_3O(CH_2)_2$- | O | 6-Cl | 4-Cl | H | $n_D^{20}$ = 1,5235 |
| 28 | $C_2H_5$ | $C_2H_5O(CH_2)_2$- | O | 6-Cl | 4-Cl | H | $n_D^{23}$ = 1,5145 |
| 29 | $C_2H_5$ | n-$C_3H_7$ | S | H | 4-Cl | 6-Cl | $n_D^{22}$ = 1,5559 |
| 30 | $C_2H_5$ | n-$C_3H_7$ | O | H | 4-Cl | H | $n_D^{22}$ = 1,5148 |
| 31 | $C_2H_5$ | sec.-$C_4H_9$ | O | H | 4-Cl | H | $n_D^{22}$ = 1,5095 |
| 32 | $C_2H_5$ | i-$C_4H_9$ | O | H | 4-Cl | H | $n_D^{22}$ = 1,5100 |
| 33 | $CH_3$ | n-$C_3H_7$ | S | H | H | H | |

| Nr. | $R^1$ | $R^2$ | X | $R^3$ | $R^4$ | $R^5$ | $n_D$ |
|---|---|---|---|---|---|---|---|
| 34 | $CH_3$ | n-$C_3H_7$ | O | H | H | H | |
| 35 | $CH_3$ | sec.-$C_4H_9$ | S | H | H | H | |
| 36 | $CH_3$ | sec.-$C_4H_9$ | O | H | H | H | |
| 37 | $CH_3$ | n-$C_3H_7$ | O | H | 4-Br | H | |
| 38 | $CH_3$ | n-$C_3H_7$ | O | H | 4-Cl | H | |
| 39 | $CH_3$ | sec.-$C_4H_9$ | O | H | H | 6-Cl | |
| 40 | $CH_3$ | n-$C_3H_7$ | O | H | | H | |
| 41 | $C_2H_5$ | $CH_3$ | O | H | H | H | |
| 42 | $C_2H_5$ | $CH_3$ | O | H | 4-Cl | H | |
| 43 | $C_2H_5$ | $CH_3$ | O | H | 4-Br | H | |
| 44 | $C_2H_5$ | $CH_3$ | O | 6-Cl | H | H | |
| 45 | $C_2H_5$ | $CH_3$ | O | 6-Cl | 4-Cl | H | |
| 46 | $C_2H_5$ | n-$C_3H_7$ | O | H | 4-F | H | |
| 47 | $C_2H_5$ | n-$C_3H_7$ | O | H | 4-CN | H | |
| 48 | $C_2H_5$ | n-$C_3H_7$ | S | H | 4-Cl | H | |

| Nr. | $R^1$ | $R^2$ | X | $R^3$ | $R^4$ | $R^5$ | $n_D$ |
|---|---|---|---|---|---|---|---|
| 49 | $C_2H_5$ | n-$C_3H_7$ | S | H | 4-F | H | |
| 50 | $C_2H_5$ | n-$C_3H_7$ | S | 6-Cl | H | H | |
| 51 | $C_2H_5$ | n-$C_3H_7$ | S | H | 4-CN | H | |
| 52 | $C_2H_5$ | 1-$C_3H_7$ | O | H | H | H | |
| 53 | $C_2H_5$ | 1-$C_3H_7$ | O | H | 4-Cl | H | |
| 54 | $C_2H_5$ | 1-$C_3H_7$ | O | H | 4-Br | H | |
| 55 | $C_2H_5$ | 1-$C_3H_7$ | O | H | 4-CN | H | |
| 56 | $C_2H_5$ | 1-$C_3H_7$ | S | H | H | H | |
| 57 | $C_2H_5$ | 1-$C_3H_7$ | S | H | 4-Cl | H | |
| 58 | $C_2H_5$ | 1-$C_3H_7$ | S | H | 4-Br | H | |
| 59 | $C_2H_5$ | 1-$C_3H_7$ | S | H | 4-CN | H | |
| 60 | $C_2H_5$ | 1-$C_3H_7$ | O | H | 4-CN | H | |
| 61 | $C_2H_5$ | sec.-$C_4H_9$ | S | H | 4-Cl | H | |
| 62 | $C_2H_5$ | sec.-$C_4H_9$ | S | H | 4-Br | H | |
| 63 | $C_2H_5$ | sec.-$C_4H_9$ | S | H | 4-F | H | |

| Nr. | $R^1$ | $R^2$ | X | $R^3$ | $R^4$ | $R^5$ | $n_D$ |
|---|---|---|---|---|---|---|---|
| 64 | $C_2H_5$ | sec.-$C_4H_9$ | S | H | 4-CN | H | |
| 65 | $C_2H_5$ | sec.-$C_4H_9$ | S | 6-Cl | 4-Cl | H | |
| 66 | $C_2H_5$ | 1-$C_4H_9$ | O | H | H | H | $n_D^{24}$ = 1,4990 |
| 67 | $C_2H_5$ | 1-$C_4H_9$ | O | H | 4-CN | H | |
| 68 | $C_2H_5$ | 1-$C_4H_9$ | S | H | H | H | $n_D^{25}$ = 1,5307 |
| 69 | $C_2H_5$ | 1-$C_4H_9$ | S | H | 4-Cl | H | |
| 70 | $C_2H_5$ | 1-$C_4H_9$ | S | H | 4-Br | H | |
| 71 | $C_2H_5$ | 1-$C_4H_9$ | S | H | 4-CN | H | |
| 72 | $C_2H_5$ | 1-$C_4H_9$ | S | 6-Br | 4-Br | H | |
| 73 | $C_2H_5$ | 1-$C_4H_9$ | S | H | 4-F | H | |
| 74 | $C_2H_5$ | 1-$C_4H_9$ | S | H | 4-Cl | 6-Cl | |
| 75 | $C_2H_5$ | $CH_3O(CH_2)_2$- | O | H | 4-Cl | H | |
| 76 | $C_2H_5$ | $C_2H_5O(CH_2)_2$- | O | H | 4-Cl | H | |
| 77 | $C_2H_5$ | 1-$C_3H_7O(CH_2)_2$- | O | H | H | H | |
| 78 | $C_2H_5$ | 1-$C_3H_7O(CH_2)_2$- | O | H | 4-Cl | H | |

| Nr. | $R^1$ | $R^2$ | X | $R^3$ | $R^4$ | $R^5$ | $n_D$ |
|---|---|---|---|---|---|---|---|
| 79 | $C_2H_5$ | $1-C_3H_7O(CH_2)_2-$ | O | H | 4-Br | H | |
| 80 | $C_2H_5$ | $1-C_3H_7O(CH_2)_2-$ | O | H | 4-CN | H | |
| 81 | $C_2H_5$ | $1-C_3H_7O(CH_2)_2-$ | O | 6-Br | 4-Br | H | |
| 82 | $C_2H_5$ | $1-C_3H_7O(CH_2)_2-$ | O | 6-Cl | 4-Cl | H | |
| 83 | $C_2H_5$ | $C_5H_9$ | O | H | H | H | |
| 84 | $C_2H_5$ | $C_5H_9$ | O | H | 4-Cl | H | |
| 85 | $C_2H_5$ | $C_5H_9$ | O | H | 4-Br | H | |
| 86 | $C_2H_5$ | $C_5H_9$ | S | H | H | H | |
| 87 | $C_2H_5$ | $C_5H_9$ | S | H | 4-Cl | H | |
| 88 | $C_2H_5$ | $C_5H_9$ | S | H | 4-Br | H | |
| 89 | $C_2H_5$ | $CH_3-(CH_2)_2-CH(CH_3)-$ | O | H | H | H | |
| 90 | $C_2H_5$ | $CH_3-(CH_2)_2-CH(CH_3)-$ | O | H | 4-Cl | H | |
| 91 | $C_2H_5$ | $CH_3-(CH_2)_2-CH(CH_3)-$ | O | H | 4-Br | H | |
| 92 | $C_2H_5$ | $ClCH_2-(CH_2)_2-$ | O | H | H | H | |
| 93 | $C_2H_5$ | $ClCH_2-(CH_2)_2-$ | O | H | 4-Cl | H | |

Die 3-Fluorphenyl-(di)thiophosphorsäureester der Formel I sind geeignet, Schädlinge aus der Klasse der Insekten, Spinnentiere und Nematoden wirksam zu bekämpfen. Sie können im Pflanzenschutz sowie auf dem Hygiene-, Vorratsschutz- und Veterinärsektor als Schädlingsbekämpfungsmittel eingesetzt werden.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspiner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling) ;

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agricotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner) ;

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata ;

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise) ;

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze) ;

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon

onobrychis (Grüne Erbsenlaus), Macrosiphon rasae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus) ;

aus der Ordnung der Termiten (Isoptera) beispielsweise Reticulitermes lucifugus, Calotermes flavicollis, Leucotermes flavipes, Termes natalensis :

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melano plus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Spinnentiere (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z. B. Meloidogyne incognita, Meloidogyne hapla, Meloidogyne javanica, Zysten bildende Nematoden, z. B. Heterodera rostochiensis, Heterodera schachtii, Heterodera avenae, Heterodera glycines, Heterodera triflolii, Stock- und Blattälchen, z. B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die Wirkstoffe können als solche, in Form ihrer Formulierungen oder den daraus bereiteten Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind :

I. 5 Gewichtsteile der Verbindung Nr. 1 werden mit 95 Gewichtsteilen feinteiligem Kaolin innig vermischt. Man erhält auf diese Weise ein Stäubemittel, das 3 Gew.% des Wirkstoffs enthält.

II. 30 Gewichtsteile der Verbindung Nr. 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 10 Gewichtsteile der Verbindung Nr. 4 werden in einer Mischung gelöst, die aus 90 Gewichtsteilen Xylol, 6 Gewichtsteilen des Anlagerungsproduktes von 8 bis 10 Mol Äthylenoxid an 1 Mol Ölsäure-N-monoethanol-amid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

IV. 20 Gewichtsteile der Verbindung Nr. 13 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

V. 80 Gewichtsteile der Verbindung Nr. 19 werden mit 3 Gewichtsteilen des Natriumsalzes der Diisobutylnaphthalin-alpha-sulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwichen 0,5 und 90 Gew.%.

Die Wirkstoffkonzentrationen in den anwendungsfertigen Zubereitungen können in größeren Bereichen variiert werden.

Im allgemeinen liegen sie zwischen 0,000 1 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Zu den Wirkstoffen können Öle verschiedenen Typs, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden : 1,2-Dibrom-3-chlorpropan, 1,3-Dichlorpropen, 1,3-Dichlorpropen + 1,2-Dichlorpropan, 1,2-Dibrom-ethan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethylbenzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropylphosphoramidat, O,O-Diethyl-O-[p-methylsulfinyl-phenyl]-phosphorthioat, O-Ethyl-S-phenyl-ethyl-phosphonodithioat, O,O-Diethyl-[2-chlor-1-(2,4-dichlorphenyl)-vinyl]-phosphat, O,O-Dimethyl-[2-chlor-1-(2,4,5-trichlorphenyl)]-vinylphosphat, O,O-Dimethyl-S-(1'-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-hydroxyethylphosphonat, O,O-Dimethyl-S-[1,2-biscarbethoxy-ethyl-(1)]-phosphordithioat, O,O-Dimethyl-O-(1-methyl-2-carbmethoxy-vinyl)-phosphat, O,O-Dimethyl-S-(N-methyl-carbamoyl-methyl)-phosphordithioat, O,O-Dimethyl-S-(N-methylcarbamoyl-methyl)-phosphorthioat, O,O-Dimethyl-S-(N-methoxyethyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methyl-carbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethylthio-methyl)-phosphordithioat, O,O-Diethyl-S-[(p-chlorphenylthio)-methyl]-phosphordithioat, O,O-Dimethyl-S-(2-ethylthioethyl)-phosphordithioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthioethyl)-phosphordithioat, O,O-Diethyl-S-(2-ethylsulfinylethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl(3)]-

methyldithiophosphat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O[2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis, -trans-chrysanthemat, 5-Benzyl-furyl-(3)-methyl-DL-cis, -trans-chrysanthemat, 3-Phenoxybenzyl (±)-cis, trans-2,2-dimethyl-3-(2,2-dichlorvinyl)-cyclopropancarboxylat, α-Cyano-3-phenoxybenzyl (±)-cis, trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoethyl-DL-cis, trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Die folgenden Beispiele belegen die biologische Wirkung der Verbindungen. Vergleichsmittel sind die bekannten Wirkstoffe O-Ethyl-S-n-propyl-O-(2,4-dichlorphenyl)-thiolphosphat (I) (DE-AS 21 63 391) und O-n-Propyl-S-ethyl-O-(4-fluorphenyl)-thiolphosphat (II) (SU-PS 482 460).

Die Numerierung der Wirkstoffe entspricht der der tabellarischen Auflistung.

## Beispiel 1

Fraß- und Kontaktwirkung auf Raupen der Kohlschabe (Plutella maculipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt. Nach 48 Stunden beurteilt man die Wirkung.

In diesem Test zeigen z. B. die folgenden Wirkstoffe eine überlegene Wirkung gegenüber dem Stand der Technik : Nr. 1, 2, 3, 5, 6, 7, 9, 10, 13, 14, 15, 17, 18, 19, 20, 22, 23, 24, 25, 29, 32.

## Beispiel 2

Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium versetzt. Die Versuchstemperatur beträgt 20 °C. Nach 25 Stunden wird die Wirkung ermittelt.

Bei diesem Test zeigen z. B. die folgenden Wirkstoffe eine überlegene Wirkung gegenüber dem Stand der Technik : Nr. 4, 6, 10, 14: 17, 18, 20, 24, 25, 29.

## Beispiel 3

Kontaktwirkung auf Schaben (Blatta orientalis)

Der Boden eines 1 l-Einmachglases wird mit der acetonischen Lösung des Wirkstoffs behandelt. Nach dem Verdunsten des Lösungsmittels setzt man je Glas 5 adulte Schaben. Die Mortalitätsrate wird nach 48 Stunden bestimmt.

In diesem Test zeigen die Wirkstoffe Nr. 1, 2, 3, 4, 5, 6, 7, 8, 10, 13, 14, 15, 16, 19, 20, 21, 22, 23, 24, 25, 26, 27, 28, 29, 30, 31, 32 eine bessere Wirkung als die zum Stand der Technik gehörenden Verbindungen.

## Beispiel 4

Kontaktwirkung auf Kornkäfer (Sitophilus granaria)

Petrischalen von 10 cm Durchmesser werden mit acetonischer Wirkstofflösung ausgekleidet. Nach dem Verdunsten des Lösungsmittels belegt man die Schalen mit 100 Kornkäfern. Nach 4 Stunden werden die Käfer in unbehandelte Gefäße überführt. Die Mortalitätsrate wird nach 24 Stunden ermittelt. Dabei wird festgestellt, wieviele Käfer in der Lage sind, nach diesem Zeitpunkt innerhalb 60 Minuten ein unbehandeltes Pappschälchen (Durchmesser 40 mm, Höhe 10 mm) zu verlassen.

In diesem Test zeigen die Wirkstoffe Nr. 2, 3, 5, 6, 7, 14, 15, 16, 19, 20, 21, 24, 25, 28, 29, 30, 31 eine überlegene Wirkung.

## Beispiel 5

Kontaktwirkung auf Zecken (Ornithodorus moubata)

Geprüft wird mit Zecken im 3. Larvenstadium. Dazu taucht man die Tiere, die sich in einem

Papierbeutel befinden, für 3 Sekunden in die Prüfemulsion. Die Beutel werden frei aufgehängt. Nach 48 Stunden wird die Wirkung auf die Zecken beurteilt.

In diesem Test zeigen die Wirkstoffe Nr. 2, 5, 6, 7, 9, 14, 15, 16, 20, 21, 23, 25, 26, 31, 32 eine gute Wirkung.

Beispiel 6

Wirkung auf Wurzelgallennematoden (Meloidogyne incognita)

Junge Tomatenpflanzen werden in je 500 g Komposterde gepflanzt, die stark mit Wurzelgallennematoden infiziert ist. Nach drei Tagen erfolgt die Behandlung mit der wäßrigen Wirkstoffaufbereitung durch Spritzen von 50 ml Aufbereitung in der Spritzkammer.

Nach 6 bis 8 Wochen bonitiert man die Wurzeln auf Gallenbildung.

Bei diesem Test zeigen z. B. die Wirkstoffe Nr. 1, 2, 3, 4, 5, 6, 7, 8, 11, 14, 20, 21, 29 eine überlegene Wirkung.

Beispiel 7

Wirkung auf Spinnmilben (Tetranychus telarius)

Getopfte Buschbohnen, die das erste Folgeblattpaar entwickelt haben und einen starken Besatz aller Stadien der Spinnmilbe Tetranchus telarius tragen, werden in der Spritzkabine mit wäßrigen Wirkstoffaufbereitungen tropfnaß gespritzt. Die Pflanzen kommen dazu auf einen Drehteller und werden von allen Seiten mit 50 ml Spritzbrühe besprüht. Der Sprühvorgang dauert ca. 22 Sekunden.

Nach 8 Tagen werden die Pflanzen auf lebende Spinnmilben untersucht.

In diesem Test zeigen z. B. die folgenden Wirkstoffe eine überlegene Wirkung gegenüber dem Stand der Technik : 3, 13, 17.

Beispiel 8

Kontaktwirkung auf Stubenfliegen (Musca domestica) ; Dauerkontakt

Beide Teile einer Petrischale von 10 cm Durchmesser werden mit insgesamt 2 ml der acetonischen Wirkstofflösung ausgekleidet. Nach dem Verdunsten des Lösungsmittel (ca. 30 Minuten) bringt man je 20 4 Tage alte Fliegen in die Schalen. Die Mortalitätsrate wird nach 4 Stunden festgestellt.

In diesem Test wird mit den Wirkstoffen Nr. 1 bis 32 eine sehr hohe Mortalitätsrate erzielt.

Beispiel 9

Kontaktwirkung auf Baumwollwanzen (Dysdercus intermedius)

Petrischalen von 10 cm Durchmesser werden mit 1 ml acetonischer Wirkstofflösung ausgekleidet.

Nach dem Verdunsten des Lösungsmittels besetzt man die Schalen mit je 20 Larven des vorletzten Stadiums und registriert die Wirkung nach 24 Stunden.

In diesem Test zeigen die Wirkstoffe Nr. 2, 3, 5, 6, 9, 19, 20, 21, 23, 31, 32 eine überlegene Wirkung.

Kontaktwirkung auf Schaben (Blatta orientalis)

Der Boden eines 1 l Weckglases wird mit der acetonischen Lösung der Wirkstoffes behandelt.

Nach Verdunsten des Lösungsmittels setzt man je Glas 5 adulte Schaben.

Die Mortalitätsrate wird nach 48 Stunden bestimmt.

| Probe Nr. | [mg] | [% Mort.] |
|---|---|---|
| 1 | 0,1 | 100 |
| 2 | 0,05 | 100 |
| 3 | 0,05 | 100 |
| 4 | 0,1 | 100 |
| 5 | 0,05 | 100 |
| 6 | 0,05 | 100 |

(Fortsetzung)

| Probe Nr. | [mg] | [% Mort.] |
|---|---|---|
| 7 | 0,05 | 80 |
| 8 | 0,05 | 80 |
| 10 | 0,1 | 100 |
| 13 | 0,05 | 80 |
| 14 | 0,1 | 100 |
| 15 | 0,1 | 100 |
| 16 | 0,1 | 100 |
| 19 | 0,05 | 100 |
| 20 | 0,05 | 100 |
| 21 | 0,1 | 100 |
| 22 | 0,05 | 80 |
| 23 | 0,1 | 100 |
| 24 | 0,02 | 80 |
| 25 | 0,05 | 100 |
| 26 | 0,05 | 100 |
| 27 | 0,1 | 100 |
| 28 | 0,05 | 100 |
| 29 | 0,05 | 100 |
| 30 | 0,02 | 100 |
| 31 | 0,05 | 100 |
| 32 | 0,02 | 80 |
| Vergleichsmittel II | 1,0 | 50 |

Dauerkontakt auf Stubenfliegen (Musca domestica)

Petrischalen mit 10 cm Durchmesser werden innen mit der acetonischen Lösung der Wirkstoffe behandelt.

Nach dem Verdunsten des Lösungsmittels besetzt man die Schalen mit 20 4-Tage alten Stubenfliegen.

Die Mortalitätsrate wird nach 4 Stunden ermittelt.

| Probe Nr. | [mg] | [% Mort.] |
|---|---|---|
| 1 | 0,005 | 100 |
| 2 | 0,005 | 100 |
| 3 | 0,01 | 100 |
| 4 | 0,005 | 100 |
| 5 | 0,02 | 100 |
| 6 | 0,005 | 100 |
| 7 | 0,01 | 100 |
| 8 | 0,02 | 100 |
| 9 | 0,02 | 100 |

(Fortsetzung)

| Probe Nr. | [mg] | [% Mort.] |
|---|---|---|
| 10 | 0,01 | 100 |
| 11 | 0,02 | 100 |
| 12 | 0,01 | 100 |
| 13 | 0,02 | 100 |
| 14 | 0,02 | 100 |
| 15 | 0,02 | 100 |
| 19 | 0,002 | 80 |
| 20 | 0,005 | 80 |
| 21 | 0,005 | 100 |
| 22 | 0,02 | 100 |
| 23 | 0,01 | 100 |
| 24 | 0,005 | 100 |
| 25 | 0,01 | 100 |
| 27 | 0,02 | 100 |
| 28 | 0,02 | 100 |
| 29 | 0,02 | 100 |
| 30 | 0,002 | 80 |
| 31 | 0,005 | 80 |
| 32 | 0,005 | 80 |

Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium besetzt.
Die Versuchstemperatur beträgt 20 °C. Nach 24 Stunden wird die Wirkung ermittelt.

| Probe Nr. | [ppm] | [% Mort.] |
|---|---|---|
| 4 | 0,01 | 100 |
| 6 | 0,02 | 100 |
| 10 | 0,02 | 100 |
| 14 | 0,01 | 100 |
| 17 | 0,04 | 100 |
| 18 | 0,02 | 100 |
| 20 | 0,02 | 100 |
| 24 | 0,02 | ca. 80 |
| 25 | 0,02 | 100 |
| 29 | 0,02 | 100 |
| Vergleichsmittel I | 0,08 | 100 |

Kontaktwirkung auf Kornkäfer (Sitophilus granaria)

Petrischalen von 10 cm Durchmesser werden mit der acetonischen Wirkstofflösung ausgekleidet. Nach Verdunsten des Lösungsmittels belegt man die Schalen mit 100 Kornkäfern. Nach 4 Stunden werden die Käfer in unbehandelte Gefäße überführt. Die Mortalitätsrate wird nach 24 Stunden ermittelt. Dabei wird festgestellt, wieviele Käfer in der Lage sind, nach diesem Zeitpunkt innerhalb von 60 Minuten ein unbehandeltes Pappschälchen (Ø 40 mm, Höhe 10 mm) zu verlassen.

| Probe Nr. | [mg] | [% Mort.] |
|---|---|---|
| 2 | 0,02 | 100 |
| 3 | 0,02 | 100 |
| 5 | 0,01 | 80 |
| 6 | 0,01 | 80 |
| 7 | 0,01 | 80 |
| 14 | 0,01 | 80 |
| 15 | 0,02 | 100 |
| 16 | 0,02 | 100 |
| 19 | 0,02 | 100 |
| 20 | 0,02 | 100 |
| 21 | 0,01 | 80 |
| 24 | 0,01 | 80 |
| 25 | 0,01 | 80 |
| 28 | 0,01 | 80 |
| 29 | 0,02 | 100 |
| 30 | 0,02 | 100 |
| 31 | 0,01 | 100 |
| Vergleichsmittel I | 0,02 | 80 |

Fraß- und Kontaktwirkung auf Raupen der Kohlschabe (Plutella maculipennis)

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

| Probe Nr. | [%] | [% Mort.] |
|---|---|---|
| 1 | 0,001 | ca. 80 |
| 2 | 0,002 | 100 |
| 3 | 0,002 | 100 |
| 5 | 0,0004 | 100 |
| 6 | 0,002 | 100 |
| 7 | 0,002 | 100 |
| 9 | 0,001 | 100 |
| 10 | 0,002 | ca. 80 |

(Fortsetzung)

| Probe Nr. | [%] | [% Mort.] |
|---|---|---|
| 13 | 0,0004 | 100 |
| 14 | 0,0004 | 100 |
| 15 | 0,002 | 100 |
| 17 | 0,0004 | ca. 80 |
| 18 | 0,0004 | ca. 80 |
| 19 | 0,001 | ca. 80 |
| 20 | 0,001 | ca. 80 |
| 22 | 0,002 | 100 |
| 23 | 0,001 | ca. 80 |
| 24 | 0,001 | ca. 80 |
| 25 | 0,001 | 100 |
| 29 | 0,001 | ca. 80 |
| 32 | 0,005 | ca. 80 |
| Vergleichsmittel II | 0,1 | 50 |

Kontaktwirkung auf Baumwollwanze (Dysdercus intermedius)

Petrischalen von 10 cm Durchmesser werden mit 1 ml der acetonischen Wirkstofflösung ausgekleidet.

Nach Verdunsten des Lösungsmittels besetzt man die Schalen mit je 20 Larven des vorletzten Stadiums und registriert die Wirkung nach 24 Stunden.

| Probe Nr. | [mg] | [% Mort.] |
|---|---|---|
| 2 | 0,002 | 100 |
| 3 | 0,002 | 100 |
| 5 | 0,005 | 100 |
| 6 | 0,005 | 100 |
| 9 | 0,005 | 100 |
| 19 | 0,005 | 100 |
| 20 | 0,005 | 100 |
| 21 | 0,005 | 100 |
| 23 | 0,005 | 100 |
| 31 | 0,005 | 100 |
| 32 | 0,005 | 100 |
| Vergleichsmittel I | 0,005 | 80 |

Wirkung auf Spinnmilben (Tetranychus telarius)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 22 Sekunden.

Nach 8 Tagen werden die Pflanzen auf lebende Spinnmilben untersucht.

| Probe Nr. | [%] | [% Mort.] |
|---|---|---|
| 3 | 0,01 | 100 |
| 13 | 0,01 | ca. 90 |
| 17 | 0,01 | ca. 90 |
| Vergleichsmittel I | 0,02 | 100 |
| Vergleichsmittel II | 0,1 | <50 |

Kontaktwirkung auf Zecken (Ornithodorus moubata)

Geprüft wird mit Zecken im 2. Larvenstadium. Dazu taucht man die Tiere, die sich in einem « Teefix »-Beutel befinden, für 3 Sekunden in die Prüfemulsion. Die Beutel werden frei aufgehängt. Nach 48 Stunden wird die Wirkung auf die Zecken beurteilt.

| Probe Nr. | [mg] | [% Mort.] |
|---|---|---|
| 2 | 0,001 | 80 |
| 5 | 0,002 | 100 |
| 6 | 0,002 | 100 |
| 7 | 0,0004 | 100 |
| 9 | 0,002 | 100 |
| 14 | 0,001 | 100 |
| 15 | 0,001 | 100 |
| 16 | 0,002 | 100 |
| 20 | 0,001 | 80 |
| 21 | 0,002 | 100 |
| 23 | 0,001 | 100 |
| 25 | 0,001 | 100 |
| 26 | 0,001 | 100 |
| 31 | 0,002 | 100 |
| 32 | 0,002 | 100 |

Wirkung auf Wurzelgallennematoden (Meloidogyne incognita)

Jeweils 300 g einer Komposterde, die stark durch Wurzelgallennematoden infiziert ist, werden mit 30 ml der 0,1-%igen wäßrigen Wirkstoffaufbereitung innig gemischt und in Blumentöpfe abgefüllt. Diese bepflanzt man mit Tomatensämlingen und hält sie unter Gewächshausbedingungen bei 25 bis 26 °C.

Nach 6 bis 8 Wochen beurteilt man die Vergallung der Wurzeln.

| Probe Nr. | [ppm] | [Gallenbildung] |
|---|---|---|
| 1 | 100 | keine |
| 2 | 100 | keine |
| 3 | 100 | keine |
| 4 | 100 | keine |

(Fortsetzung)

| Probe Nr. | [ppm] | [Gallenbildung] |
|---|---|---|
| 5 | 100 | keine |
| 6 | 100 | keine |
| 7 | 100 | keine |
| 8 | 100 | keine |
| 11 | 100 | keine |
| 14 | 100 | keine |
| 20 | 100 | keine |
| 21 | 100 | keine |
| 29 | 100 | keine |
| Vergleichsmittel II | 100 | starke |

**Patentansprüche**

1. 3-Fluorphenyl-(di)thiophosphorsäureester der Formel

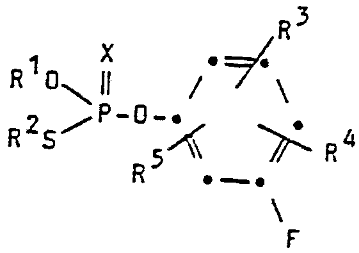

(I)

in der

$R^1$ Alkyl mit 1 bis 3 Kohlenstoffatomen,

$R^2$ Alkyl oder Halogenalkyl mit 1 bis 5 Kohlenstoffatomen, Alkoxyalkyl oder Alkylthioalkyl mit 2 bis 8 Kohlenstoffatomen oder Cycloalkyl mit 3 bis 6 Kohlenstoffatomen,

$R^3$ $R^4$, $R^5$ unabhängig voneinander Wasserstoff, Halogen, Cyano, Nitro, Alkyl, Alkoxy oder Alkylthio mit 1 bis 6 Kohlenstoffatomen und

X Sauerstoff oder Schwefel bedeuten.

2. Schädlingsbekämpfungsmittel, enthaltend einen 3-Fluorphenyl-(di)thiophosphorsäureester der Formel I gemäß Anspruch 1.

3. Schädlingsbekämpfungsmittel, enthaltend einen festen oder flüssigen Trägerstoff und einen 3-Fluorphenyl-(di)thiophosphorsäureester der Formel I gemäß Anspruch 1.

4. Verwendung von 3-Fluorphenyl-(di)thiophosphorsäureestern der Formel I gemäß Anspruch 1 zur Bekämpfung von Schädlingen.

5. Verfahren zur Bekämpfung von Schädlingen, dadurch gekennzeichnet, daß man einen 3-Fluorphenyl-(di)thiophosphorsäureester der Formel I gemäß Anspruch 1 auf die Schädlinge und/oder deren Lebensraum einwirken läßt.

6. Verfahren zur Herstellung von 3-Fluorphenyl-(di)thiophosphorsäureestern der Formel I gemäß Anspruch 1, dadurch gekennzeichnet, daß man ein O,S-Dialkylphosphorsäureesterchlorid der Formel II

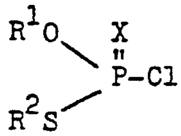

(II)

in der $R^1$, $R^2$ und X die im Anspruch 1 angegebene Bedeutungen haben, gegebenenfalls in Gegenwart eines säurebindenden Mittels und in Gegenwart eines Verdünnungsmittels mit einem 3-Fluorphenol der Formel III

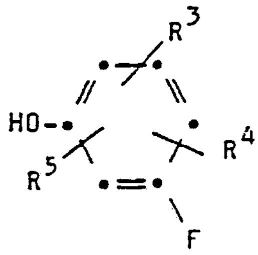

(III)

in der $R^3$, $R^4$ und $R^5$ die im Anspruch 1 genannten Bedeutungen haben, oder mit einem Salz eines 3-Fluorphenols der Formel III gegebenenfalls in Gegenwart eines Verdünnungsmittels umsetzt.

**Claims**

1. A 3-fluorophenyl(di)thiophosphate of the formula

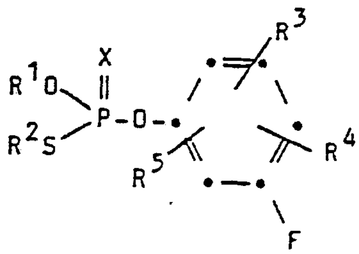

(I)

where
$R^1$ is alkyl of 1 to 3 carbon atoms,
$R^2$ is alkyl or haloalkyl of 1 to 5 carbon atoms, alkoxyalkyl or alkylthioalkyl of 2 to 8 carbon atoms or cycloalkyl of 3 to 6 carbon atoms,
$R^3$, $R^4$ and $R^5$ independently of one another are hydrogen, halogen, cyano, nitro, alkyl, alkoxy or alkylthio of 1 to 6 carbon atoms and
X is oxygen or sulfur.

2. A pesticide containing a 3-fluorophenyl(di)thiophosphate of the formula I as claimed in claim 1.

3. A pesticide containing a solid or liquid carrier and a 3-fluorophenyl(di)thiophosphate of the formula I as claimed in claim 1.

4. The use of a 3-fluorophenyl(di)thiophosphate of the formula I as claimed in claim 1 for combating pests.

5. A process for combating pests, wherein a 3-fluorophenyl(di)thiophosphate of the formula I as claimed in claim 1 is allowed to act on the pests or their habitat.

6. A process for the manufacture of a 3-fluorophenyl(di)thiophosphate of the formula I as claimed in claim 1, wherein an O,S-dialkylphosphoric acid ester chloride of the formula

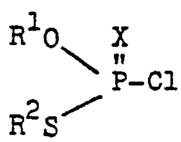

(II)

where $R^1$, $R^2$ and X have the meanings given in claim 1, is reacted with a 3-fluorophenol of the formula

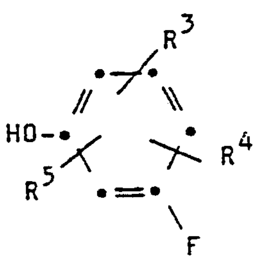

(III)

where $R^3$, $R^4$ and $R^5$ have the meanings given in claim 1, in the presence or absence of an acid acceptor and in the presence of a diluent, or with a salt of a 3-fluorophenol of the formula III in the presence or absence of a diluent.

**Revendications**

1. Esters d'acides fluoro-3 phényl-(di)thio-phosphoriques de la formule

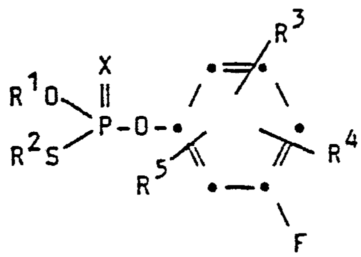

(I)

dans laquelle

$R^1$ désigne un radical alkyle en $C_1$ à $C_3$,

$R^2$ désigne un groupe alkyle ou halo-alkyle en $C_1$ à $C_5$, alcoxyalkyle ou alkylthioalkyle en $C_2$ à $C_8$ ou cycloalkyle en $C_3$ à $C_6$,

$R^3$, $R^4$ et $R^5$ représentent chacun, indépendamment des autres, un atome d'hydrogène ou d'halogène ou un groupe cyano, nitro, alkyle, alcoxy ou alkylthio en $C_1$ à $C_6$ et

X désigne de l'oxygène ou du soufre.

2. Composition pesticide, contenant un ester d'acide fluoro-3 phényl-(di)thio-phosphorique de la formule I selon la revendication 1.

3. Composition pesticide, contenant un ester d'acide fluoro-3 phényl-(di)thio-phosphorique de la formule I selon la revendication 1 et une matière support solide ou liquide.

4. Utilisation d'esters d'acides fluoro-3 phényl-(di)thio-phosphoriques de la formule I selon la revendication 1 dans la lutte contre les parasites.

5. Procédé de lutte contre des parasites, caractérisé en ce que l'on fait agir un ester d'acide fluoro-3 phényl-(di)thio-phosphorique de la formule I selon la revendication 1 sur les parasites et (ou) le biotope de ceux-ci.

6. Procédé de préparation d'esters d'acides fluoro-3 phényl-(di)thio-phosphoriques de la formule I selon la revendication 1, caractérisé en ce que l'on fait réagir un chlorure d'ester d'acide 0,2-dialkyl-phosphorique de la formule II

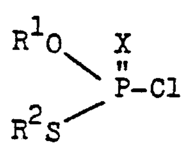

(II)

dans laquelle $R^1$, $R^2$ et X possèdent les significations définies dans la revendication 1, soit avec un fluoro-3 phénol de la formule III

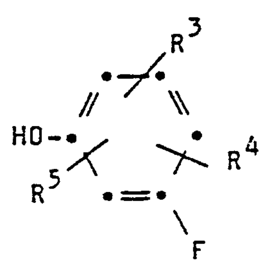

(III)

dans laquelle $R^3$, $R^4$ et $R^5$ possèdent les significations définies dans la revendication 1, éventuellement en présence d'un agent fixant les acides et en présence d'un diluant,
soit avec un sel d'un fluoro-3 phénol de la formule III, éventuellement en présence d'un diluant.